(19)

Europäisches
Patentamt
European
Patent Office
Office européen
des brevets

(11) **EP 1 972 989 A2**

(12) **EUROPEAN PATENT APPLICATION**

(43) Date of publication:
 **24.09.2008 Bulletin 2008/39**

(51) Int Cl.:
 **G02F 1/1362** (2006.01)   **G09G 3/36** (2006.01)

(21) Application number: **08003999.3**

(22) Date of filing: **04.03.2008**

(84) Designated Contracting States:
 **AT BE BG CH CY CZ DE DK EE ES FI FR GB GR HR HU IE IS IT LI LT LU LV MC MT NL NO PL PT RO SE SI SK TR**
 Designated Extension States:
 **AL BA MK RS**

(30) Priority: **23.03.2007 KR 20070028785**

(71) Applicant: **Samsung Electronics Co., Ltd.**
 **Yeongtong-gu**
 **Suwon-city, Gyeonggi-do 442-742 (KR)**

(72) Inventors:
 • **Shin, Kyoung-Ju**
  **Gyeonggi-do (KR)**
 • **Kim, Shi-Yul**
  **Gyeonngi-do (KR)**
 • **Kim, Jang-Soo**
  **Gyeonggi-do (KR)**

(74) Representative: **Dr. Weitzel & Partner**
 **Friedenstrasse 10**
 **89522 Heidenheim (DE)**

(54) **Active matrix display substrate having tailored subpixel auxiliary capacitances according to colour**

(57)   In colour active matrix LCDs, the kickback voltages $V_{kb}$ (also called feed-through voltages) may be different between pixels of a different colour. At low grey scale voltages, the kickback voltage (the drop in the voltage applied to the liquid crystal pixel at gate turn-off) becomes particularly significant: differences in the kickback voltages result in differences in the gamma voltages applied to those pixels, causing an undesirable colour shift. To equalise the kickback voltages and remove the colour shift, the pixel capacitances $C_{st}$ or $C_{gs}$, on which the kickback voltages depend, are individually tailored for each colour.

The storage capacitance $C_{st}$ is formed between the storage electrode (STE) and the pixel electrode (130). The dielectric is formed by a gate insulating layer (113). an overcoat layer (116) and a colour filter layer (120)- which is located on the thin film transistor substrate (140). The pixel electrode contacts the overcoat layer via a contact hole (STH) through the colour filter layer. The colour filter only contributes to the $C_{st}$ dielectric at the sides of the contact hole. The $C_{st}$ can be changed by either varying the STE area, the area of the opening of the contact hole over the STE or both.

Alternatively, the parasitic gate, source capacitance $C_{gs}$ can be changed, either by changing the length of the source electrode (SE) which overlaps the gate electrode (GE) in the TFT itself of by providing a protrusion (SEC) from the source electrode which overlaps the gate line (DL) by a different amount.

FIG. 1

**Description**

BACKGROUND OF THE INVENTION

1. Field of the Invention

The present invention relates to a display substrate and a display apparatus having the display substrate. More particularly, the present invention relates to a display substrate used for a display apparatus, and a display apparatus having the display substrate, capable of improving image display quality.

2. Description of the Related Art

A liquid crystal display (LCD) apparatus displaying an image generally includes a display substrate, an opposing substrate opposite to the display substrate and a liquid crystal layer disposed between the display substrate and the opposing substrate.
The display substrate includes an insulation substrate having a signal line, a thin-film transistor (TFT) and a pixel electrode formed thereon to independently drive a plurality of pixels. The opposing substrate includes a color filter layer and a common electrode opposite to the pixel electrode. The color filter layer includes a red color filter, a green color filter and a blue color filter.
Recently, an LCD apparatus having a color filter on array (COA) structure that includes the color filter layer formed on the display substrate has been developed in order to prevent misalignment of the display substrate and the opposing substrate.
In the LCD apparatus having the COA structure, color coordinates become lower as a grayscale becomes lower, but the color coordinates suddenly rise in a specific region of a low grayscale region. The sudden change of the color coordinates may generate a large color shift in a color of a low grayscale region. Therefore, the LCD apparatus may not display a soft image.

SUMMARY OF THE INVENTION

The present invention provides a display substrate capable of preventing colors from being shifted by changes of color coordinates in a low grayscale region.
The present invention also provides a display apparatus having the display substrate.
A display substrate according to a first example embodiment of the present invention includes a pixel layer, a color filter layer and a pixel layer. The pixel layer includes a first storage electrode, a second storage electrode and a third storage electrode respectively formed in a red pixel, a green pixel and a blue pixel. At least one of the first, second and third storage electrodes has a different area from a remainder of the storage electrodes. The color filter layer includes a red color filter, a green color filter and a blue color filter formed on the pixel layer. The red, green and blue color filters respectively correspond to the red pixel, the green pixel and the blue pixel. The pixel electrode is formed on the color filter layer and corresponds to each of the red, green and blue pixels. Areas of the first, second and third storage electrodes are controlled so that kickback voltages of the red, green and blue pixels are substantially identical to one another.
A display substrate according to a second example embodiment of the present invention includes a pixel layer, a color filter layer and a pixel electrode. The pixel layer includes a first storage electrode, a second storage electrode and a third storage electrode respectively formed in a red pixel, a green pixel and a blue pixel. The color filter layer is formed on the pixel layer. The color filter layer includes a red color filter having a first storage hole formed through the red color filter, a green color filter having a second storage hole formed through the green color filter and a blue color filter having a third storage hole formed through the blue color filter. The first, second and third storage holes respectively correspond to the first, second and third storage electrodes. At least one of the first, second and third storage holes has a different area from a remainder of the storage holes. The pixel electrode is formed on the color filter layer and corresponds to each of the red, green and blue pixels. Opening areas of the first, second and third storage holes are controlled so that kickback voltages of the red, green and blue pixels are substantially identical to one another.
A display substrate according to a third example embodiment of the present invention includes a pixel layer, a color filter layer and a pixel electrode. The pixel layer includes a first source electrode, a second source electrode and a third source electrode respectively formed in a red pixel, a green pixel and a blue pixel. The first, second and third source electrodes overlap with a gate electrode. At least one of portions of the first, second and third source electrodes overlapping with the gate electrode has a different area from a remainder of the source electrodes. The color filter layer includes a red color filter, a green color filter and a blue color filter formed on the pixel layer. The red, green and blue color filters respectively correspond to the red, green and blue pixels. The pixel electrode is formed on the color filter layer and corresponds to the red, green and blue pixels. Areas of the portions of the first, second and third source electrodes overlapping with the gate electrode are controlled so that kickback voltages of the red, green and blue pixels are substantially identical to one another.

A display substrate according to a fourth example embodiment of the present invention includes a pixel layer, a color filter layer and a pixel electrode. The pixel layer includes a first source extension portion, a second source extension portion and a third source extension portion respectively extended from source electrodes which are respectively formed in a red pixel, a green pixel and a blue pixel. The first, second and third source extension portions overlap with a gate line. At least one of the first, second and third source extension portions has a different area from a remainder of the source extension portions. The color filter layer includes a red color filter, a green color filter and a blue color filter formed on the pixel layer. The red, green and blue color filters respectively correspond to the red, green and blue pixels. The pixel electrode is formed on the color filter layer and corresponds to the red, green and blue pixels. Areas of the portions of the first, second and third source extension portions are controlled so that kickback voltages of the red, green and blue pixels are substantially identical to one another.

A display apparatus according to a fifth example embodiment of the present invention includes a display substrate, an opposing substrate and a liquid crystal layer. The display substrate includes a pixel layer, a color filter layer and a pixel electrode. The pixel layer includes a first storage electrode, a second storage electrode and a third storage electrode respectively formed in a red pixel, a green pixel and a blue pixel. The color filter layer includes a red color filter having a first storage hole formed therethrough, a green color filter having a second storage hole formed therethrough and a blue color filter having a third storage hole formed therethrough. The first, second and third storage holes respectively correspond to the first, second and third storage electrodes. At least one of the first, second and third storage electrodes has a different area from a remainder of the storage electrodes or at least one of the first, second and third storage holes having a different opening area from a remainder of the storage holes. The pixel electrode is formed on the color filter layer and corresponds to each of the red, green and blue pixels. The opposing substrate is opposite to the display substrate and includes a common electrode formed thereon. The liquid crystal layer is disposed between the display substrate and the opposing substrate. Areas of the first, second and third storage electrodes and opening areas of the first, second and third storage holes are controlled so that kickback voltages of the red, green and blue pixels are substantially identical to one another.

A display apparatus according to a sixth example embodiment of the present invention includes a display substrate, an opposing substrate and a liquid crystal layer. The display substrate includes a pixel layer, a color filter layer and a pixel electrode. The pixel layer includes a first source electrode, a second source electrode and a third source electrode respectively formed in a red pixel, a green pixel and a blue pixel. The first, second and third source electrodes overlap with a gate electrode. At least one of the first, second and third source electrodes has a different area from a remainder of the source electrodes. The color filter layer includes a red color filter, a green color filter and a blue color filter formed on the pixel layer. The red, green and blue color filters respectively correspond to the red, green and blue pixels. The pixel electrode is formed on the color filter layer and corresponds to each of the red, green and blue pixels. The opposing substrate is opposite to the display substrate and includes a common electrode formed thereon. The liquid crystal layer is disposed between the display substrate and the opposing substrate.

A display apparatus according to a seventh example embodiment of the present invention includes a display substrate, an opposing substrate and a pixel electrode. The display substrate includes a pixel layer, a color filter layer and a pixel electrode. The pixel layer includes a first source extension portion, a second source extension portion and a third source extension portion respectively extended from source electrodes which are respectively formed in a red pixel, a green pixel and a blue pixel. The first, second and third source extension portions overlap with a gate line. At least one of the first, second and third source extension portions overlapping with the gate line has a different area from a remainder of the source extension portions. The color filter layer includes a red color filter, a green color filter and a blue color filter formed on the pixel layer. The red, green and blue color filters respectively correspond to the red, green and blue pixels. The pixel electrode is formed on the color filter layer and corresponds to each of the red, green and blue pixels. The opposing substrate is opposite to the display substrate. The opposing substrate includes a common electrode formed thereon. The liquid crystal layer is disposed between the display substrate and the opposing substrate.

According to the display substrate and the display apparatus having the display substrate, the colors may be prevented from being shifted by changes of color coordinates in a low grayscale region.

BRIEF DESCRIPTION OF THE DRAWINGS

The above and other features and advantages of the present invention will become more apparent by describing in detailed example embodiments thereof with reference to the accompanying drawings, in which:

FIG. 1 is a plan view illustrating a portion of a display substrate according to a first example embodiment of the present invention;
FIG. 2 is a cross-sectional view taken along a line I-I' shown in FIG. 1;

FIG. 3 is a plan view illustrating a portion of a display substrate according to a second example embodiment of the present invention;

FIG. 4 is a plan view illustrating a portion of a display substrate according to a third example embodiment of the present invention;

FIG. 5 is a plan view illustrating a portion of a display substrate according to a fourth example embodiment of the present invention;

FIG. 6 is a cross-sectional view taken along a line II-II' shown in FIG. 5;

FIG. 7 is a plan view illustrating a portion of a display substrate according to a fifth example embodiment of the present invention; and

FIG. 8 is a cross-sectional view illustrating a display apparatus according to an example embodiment of the present invention.

DESCRIPTION OF THE EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the present invention are explained in detail with reference to the accompanying drawings.

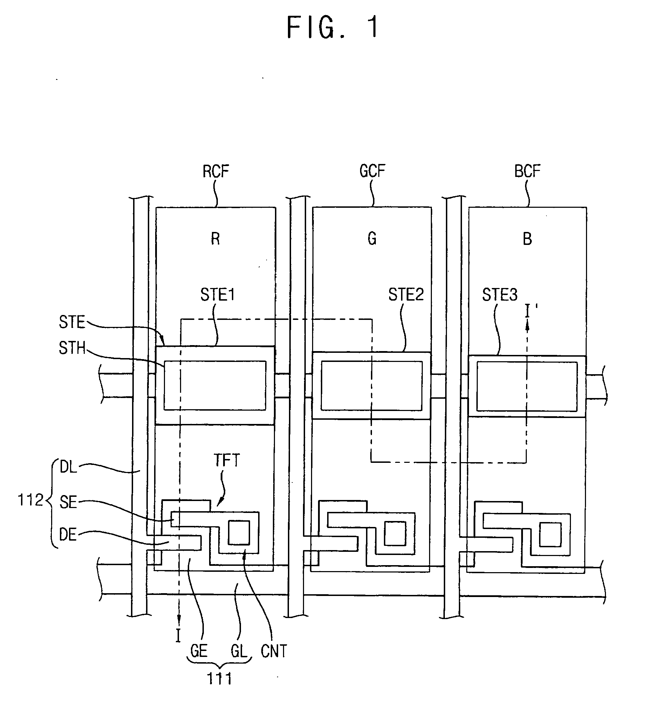

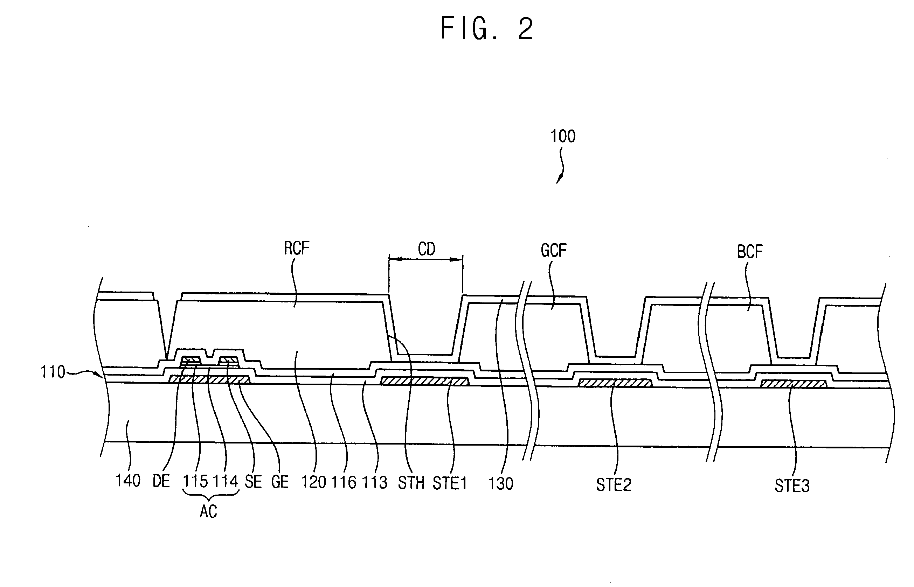

FIG. 1 is a plan view illustrating a portion of a display substrate according to a first example embodiment of the present invention. FIG. 2 is a cross-sectional view taken along a line I-I' shown in FIG. 1.

Referring to FIGS. 1 and 2, a display substrate 100 includes a pixel layer 110, a color filter layer 120 and a pixel electrode 130.

The pixel layer 110 is formed on a transparent insulation substrate 140. The insulation substrate 140 may include glass or plastic.

The pixel layer 110 includes a red pixel R, a green pixel G and a blue pixel B to display colors. In addition, the pixel layer 110 includes a gate wire 111, a data wire 112 and a storage electrode STE to independently drive each of the red, green and blue pixels R, G and B.

The gate wire 111 is formed on the insulation substrate 140. The gate wire 111 includes a gate line GL and a gate electrode GE connected to the gate line GL. As used herein, gate line GL is referred to as extending in a first direction. The gate electrode GE extends from the gate line GL. The gate electrode GE is a gate terminal of a thin-film transistor (TFT).

A gate insulation layer 113 is formed on the insulation substrate 140 having the gate wire 111 formed thereon. The gate insulation layer 113 protects the gate wire 111 and the storage electrode STE. The gate wire 111 and the storage electrode STE are insulated by the gate insulation layer 113. For example, the gate insulation layer 113 may include silicon nitride (SiNx) or silicon oxide (SiOx).

The data wire 112 is formed on the gate insulation layer 113 and insulated from the gate wire 111. The data wire 112 includes a data line DL, a drain electrode DE and a source electrode SE. The data line DL extends in a second direction different from the first direction and crosses gate line GL. The drain electrode DE is connected to the data line DL. The drain electrode DE is a drain terminal of the TFT. The source electrode SE is spaced apart from the drain electrode DE to form a channel of the TFT. The source electrode SE is a source terminal of the TFT. The source electrode SE is connected to the pixel electrode 130 through a contact hole CNT formed through an overcoat layer 116 and the color filter layer 120.

An active layer AC is formed between the gate electrode GE and the drain and source electrodes DE and SE. The active layer AC is formed on the gate insulation layer 113 corresponding to a position of the gate electrode GE. The active layer AC may include a semiconductor layer 114 and an ohmic contact layer 115. For example, the semiconductor layer 114 may include amorphous silicon (a-Si), and the ohmic contact layer 115 may include amorphous silicon doped with n+ ions at a high concentration (n+ a-Si).

The TFT includes the gate electrode GE, the drain electrode DE, the source electrode SE, and the active layer AC. The TFT is connected to the gate line GL and the data line DL. At least one TFT is formed in each pixel. The TFT applies a pixel voltage received from the data line DL to the pixel electrode 130 in response to a gate voltage received from the gate line GL.

The storage electrode STE is formed in each of the red, green and blue pixels R, G and B. The storage electrode STE is formed from the same layer as the gate line GL. For example, the storage electrode STE may be disposed between gate lines GL adjacent to each other and extended in the first direction.

The storage electrode STE is opposite to the pixel electrode 130. The gate insulation layer 113 and the overcoat layer 116 are disposed between the storage electrode STE and the pixel electrode 130. For example, the storage electrode STE may receive a common voltage Vcom. The storage capacitor Cst maintains the pixel voltage applied to the pixel electrode 130 through the TFT for a frame.

The storage electrode STE includes a first storage electrode STE1, a second storage electrode STE2 and a third storage electrode STE3 respectively formed in the red pixel R, the green pixel G and the blue pixel B. At least one of the first, second and third storage electrodes has a different area from the remaining storage electrodes to compensate for a difference of a thickness and a dielectric constant of the red, green and blue pixels R, G and B. Therefore, capacitances of each of the storage capacitors Cst respectively formed in the red, green and blue pixels R, G and B may be substantially uniform. The reason for different areas of first, second and third storage electrodes STE1, STE2 and STE3 is explained below in detail.

The overcoat layer 116 is formed on the pixel layer 110. The overcoat layer 116 protects the pixel layer 110, and the pixel layer 110 is insulated by the overcoat layer 116. For example, the overcoat layer 116 may include silicon nitride (SiNx) or silicon oxide (SiOx).

The color filter layer 120 is formed on the overcoat layer 116. The color filter layer 120 includes a red color filter RCF, a green color filter GCF and a blue color filter BCF respectively corresponding to the red pixel R, the green pixel G and the blue pixel B. For example, a red pigment, a green pigment and a blue pigment may be added to a photosensitive organic composition to respectively form the red, green and blue color filters RCF, GCF and BCF. The red, green and blue color filters RCF, GCF and BCF are regularly formed on the overcoat layer 116 to form a predetermined pattern. For example, the red, green and blue color filters RCF, GCF and BCF may be alternately arranged in the first direction or the second direction.

The color filter layer 120 may have a relative large thickness in order to flatten the display substrate 100. For example, the color filter layer 120 may have a thickness of about 2.5 $\mu$m to about 3.5 $\mu$m. In a conventional art, the color filter layer is formed on an opposing substrate. However, in an example embodiment of the present invention, the color filter layer 130 having a relatively large thickness is formed on the display substrate 100 so that an organic insulation layer for planarizing the display substrate may be removed. Therefore, transmissivity of light may be improved and manufacturing costs may be reduced.

A storage hole STH is formed through the color filter layer 120 in order to form the storage capacitor Cst, correspondingly to a position in which the storage electrode STE is formed. When the color filter layer 120 having the storage hole STH is formed, the red, green and blue color filters RCF, GCF and BCF are formed through a process using the same mask or a process using masks having the same design. Since the red, green and blue color filters RCF, GCF and BCF include different materials from one another and processes for forming the red, green and blue color filters RCF, GCF and BCF are different from one another, dielectric constants of the red, green and blue color filters RCF, GCF and BCF may be different from one another and opening widths of storage holes of the red, green and blue color filters RCF, GCF and BCF may be also different from one another. For example, in a product having a size of 40 inches, a maximum difference of the thicknesses among the red, green and blue color filters RCF, GCF and BCF may be about 2,000 A, a maximum difference of the opening widths among the red, green and blue color filters RCF, GCF and BCF may be about 3 $\mu$m, and a difference of the dielectric constants among the red, green and blue color filters RCF, GCF and BCF may be in a range of about 3.3 to about 3.5.

The thicknesses, the dielectric constants and the opening widths of the red, green and blue color filters RCF, GCF and BCF may change a liquid crystal capacitance Clc, a storage capacitance Cst and a parasitic capacitance Cgs between the gate electrode GE and the source electrode SE, which are important components of the pixel. When the liquid crystal capacitance Clc, the storage capacitance Cst and the parasitic capacitance Cgs are changed, each kickback voltage may be changed.

The change of each kickback voltage changes a grayscale voltage since products alternately drive positively and negatively with respect to the common voltage Vcom. When the kickback voltages of the red, green and blue color filters RCF, GCF and BCF are different from one another, although substantially the same pixel voltage is applied to the red, green and blue color filters RCF, GCF and BCF, gamma voltages of the red, green and blue color filters are different from one another in a low grayscale region since the kickback voltage Vkb is large in the low grayscale region and a slope of a curve of transmissivity to the voltage is large. Therefore, color coordinates may be largely changed in the low grayscale region.

Generally, the kickback voltage is defined by Equation 1 as follows;

## Equation 1

$$Vkb = Vg(on\text{-}off) \times Cgs/(Cst+Clc+Cgs)$$

As shown in Equation 1, the kickback voltage Vkb is seriously affected by the liquid crystal capacitor Clc between the pixel electrode 130 and the common electrode, the storage capacitor Cst between the storage electrode STE and the pixel electrode 130 and the parasitic capacitor Cgs between the gate electrode GE and the source electrode SE.

Accordingly, the storage capacitor Cst may compensate for the kickback voltage differences among the red, green and blue pixels R, G and B generated by material differences and process differences of the red, green and blue color filters RCF, GCF and BCF.

In order to compensate for the kickback voltage difference, the first, second and third storage capacitors STE1, STE2 and STE3 respectively formed in the red, green and blue pixels R, G and B may have different areas from one another. For example, the kickback voltages of the red, green and blue pixels R, G and B may be substantially identical to one another when the first, second and third storage capacitors STE1, STE2 and STE3 are controlled to have different areas from one another.

The pixel electrode 130 is formed on the color filter layer 120 to correspond to each of the red, green and blue pixels R, G and B. The pixel electrode 130 includes a transparent material to transmit light. For example, the pixel electrode 130 may include indium zinc oxide (IZO) or indium tin oxide (ITO).

The pixel electrode 130 is electrically connected to the source electrode SE through a contact hole formed through the color filter layer 120 and the overcoat layer 116. The pixel electrode 130 overlaps with the storage electrode STE in the storage hole region STH of the color filter layer 120 to form the storage capacitor Cst. The overcoat layer 116 and the gate insulation layer 113 are disposed between the pixel electrode 130 and the storage electrode STE in the storage hole region STH.

The pixel electrode 130 may include a plurality of opening patterns for separating a plurality of domains of the pixel electrode to improve a viewing angle. Alternatively, the pixel electrode 130 may include a main electrode and a sub-electrode which receive different voltages from each other. When the pixel electrode 130 includes the main electrode and the sub-electrode, each pixel may include two TFTs respectively connected to the main electrode and the sub-electrode.

Since the pixel electrode 130 is independently formed in each pixel, a portion between adjacent pixels may be opened to expose a portion of the color filter layer 120. Impurities may be injected through the exposed portion of the color filter layer 120 to taint the liquid crystal. In order to prevent the injection of the impurities, an inorganic insulation layer may be formed between the color filter layer 120 and the pixel electrode 130.

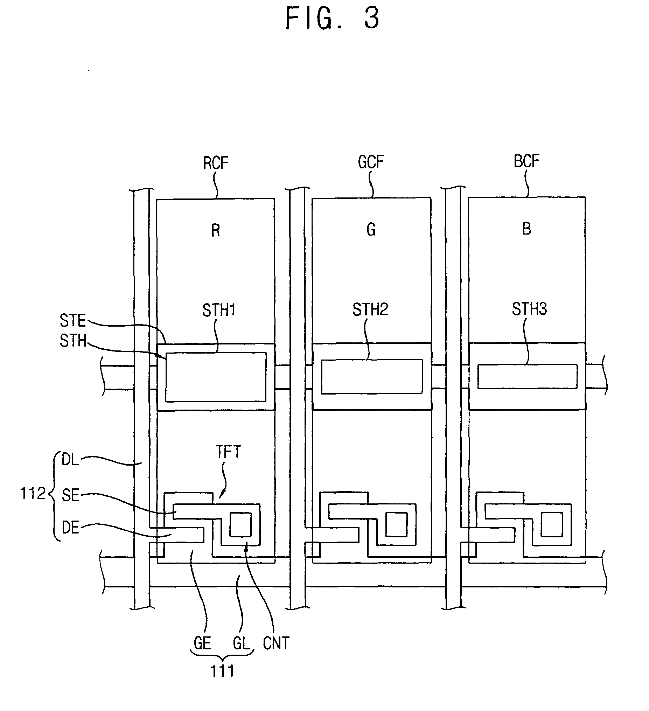

FIG. 3 is a plan view illustrating a portion of a display substrate according to a second example embodiment of the present invention. The display substrate of the present embodiment is substantially the same as in FIGS. 1 and 2 except for areas of the storage electrode and the storage holes. Thus, the same reference numerals will be used to refer to the same or like parts as those described in FIGS. 1 and 2, and any further explanation concerning the above elements is not necessary.

Referring to FIG. 3, the storage electrodes STE formed in the red, green and blue pixels R, G and B may have substantially the same area. However, the area of at least one of the first, second and third storage holes STH1, STH2 and STH3 may be different area from the others.

The storage capacitor Cst is determined by an area in which the storage electrode overlaps with the pixel electrode in the storage hole region. Therefore, when the opening areas of the first, second and third storage holes STH1, STH2 and STH3 respectively formed in the red, green and blue color filters RCF, GCF and BCF are changed, the storage capacitor Cst may be changed.

When the opening areas of the red, green and blue pixels R, G and B is differently controlled in a condition that the storage electrodes STE of the red, green and blue pixels R, G and B have substantially the same area, the kickback voltages Vkb of the red, green and blue pixels R, G and B may be controlled to be substantially the same as one another.

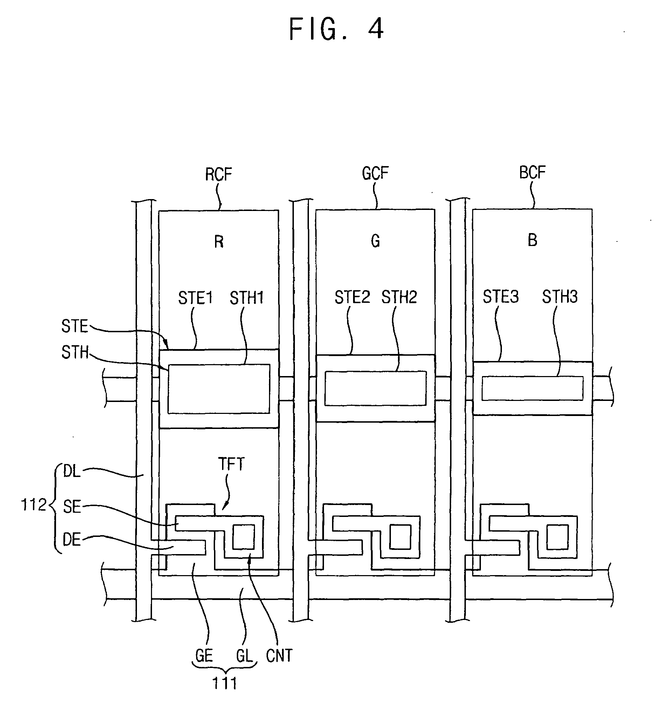

FIG. 4 is a plan view illustrating a portion of a display substrate according to a third example embodiment of the present invention. The display substrate of the present embodiment is substantially the same as in FIGS. 1 and 2 except for areas of the storage electrode and the storage holes. Thus, the same reference numerals will be used to refer to the same or like parts as those described in FIGS. 1 and 2, and any further explanation concerning the above elements is unnecessary.

Referring to FIG. 4, at least one of the first, second and third storage electrodes STE1, STE2 and STE3 respectively formed in the red, green and blue pixels R, G and B has a different area from the others. In addition, at least one of the first, second and third storage holes STH1, STH2 and STH3 respectively formed in the red, green and blue pixels R, G and B has a different opening area from the others.

When the areas of the storage electrode STE and the opening areas of the storage hole are simultaneously changed according to the red, green and blue pixels R, G and B, the kickback voltages Vkb of the red, green and blue pixels R, G and B may be substantially the same as one another.

In the above, the difference among the kickback voltages Vkb of the red, green and blue pixels R, G and B may be compensated for by the change of the storage capacitor Cst. Alternatively, the difference among the kickback voltages Vkb of the red, green and blue pixels R, G and B may be compensated for by a change of the parasitic capacitor Cgs between the gate line 111 and the source electrode SE.

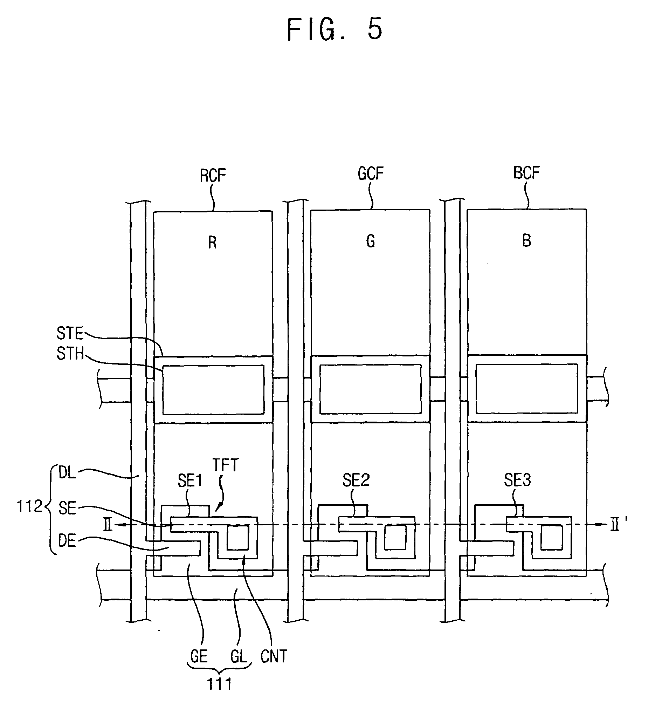

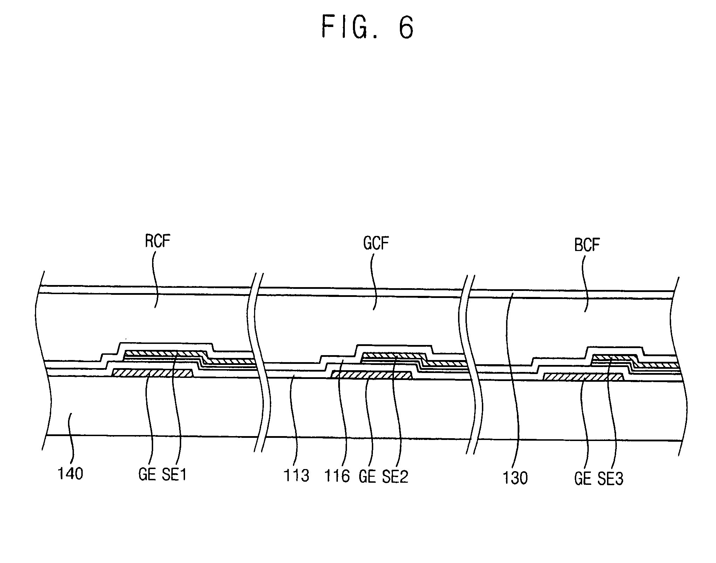

FIG. 5 is a plan view illustrating a portion of a display substrate according to a fourth example embodiment of the present invention. FIG. 6 is a cross-sectional view taken along a line II-II' shown in FIG. 5. The display substrate of the present embodiment is substantially the same as in FIGS. 1 and 2 except for an overlapping area between the gate electrode GE and the source electrode. Thus, the same reference numerals will be used to refer to the same or like parts as those described in FIGS. 1 and 2, and any further explanation concerning the above elements would be superfluous.

Referring to FIG. 5, in order to compensate for the difference among the kickback voltages of the red, green and blue pixels R, G and B, at least one of the first, second and third source electrodes SE respectively formed in the red, green and blue pixels R, G and B may have a different area of a portion of which overlaps with the gate electrode GE from the others. For example, when a length or a width of a portion of the source electrode SE overlapping with the gate electrode GE is changed according to the red, green and blue pixels R, G and B, an overlapping area between the source electrode SE and the gate electrode GE may be changed according to the red, green and blue pixels R, G and B.

When the overlapping area between the source electrode SE and the gate electrode GE is different according to the red, green and blue R, G and B, the kickback voltages Vkb of the red, green and blue pixels R, G and B may be controlled to be substantially the same as one another.

In this case, the storage electrodes STE of the red, green and blue pixels R, G and B have substantially the same area, and the storage holes STH of the red, green and blue pixels R, G and B also have substantially the same area.

When the length or the width of a portion of the source electrode SE overlapping with the gate electrode GE is changed according to the red, green and blue pixels R, G and B, a length or a width of the channel of the TFT may be changed according to the red, green and blue pixels R, G and B. Therefore, the TFTs of the red, green and blue pixels R, G and B may have different properties from one another.

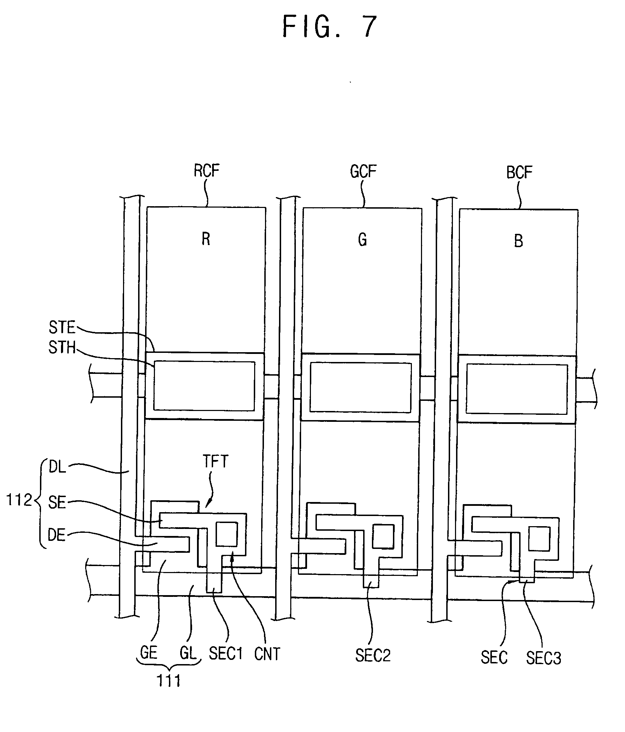

FIG. 7 is a plan view illustrating a portion of a display substrate according to a fifth example embodiment of the present invention. The display substrate of the present embodiment is substantially the same as in FIGS. 1 and 2 except for areas of the storage electrode and the source extension portion. Thus, the same reference numerals will be used to refer to the same or like parts as those described in FIGS. 1 and 2, and any further explanation concerning the above elements is not required.

Referring to FIG. 7, the portion of the source electrode SE overlapping with the gate electrode GE has substantially the same area as one another according to the red, green and blue pixels R, G and B in order to prevent the TFTs of the red, green and blue pixels R, G and B from having different properties. However, the source electrode SE may further include a source extension portion SEC overlapping with the gate line GL.

At least one of a first source extension portion SEC1, a second source extension portion SEC2 and a third source extension portion SEC3 respectively formed in the red, green and blue pixels R, G and B overlapping with the gate line GL has a different area from one another. For example, the area between the source extension portion and the gate line GL may be changed as a length of a width of the source extension portion overlapping with the gate line GL is changed.

Since the gate line GL is connected to the gate electrode GE and the source extension portion SEC is connected to the source electrode SE, controlling an overlapping area between the source extension portion SEC and the gate line GL substantially means controlling an overlapping area between the source electrode SE and the gate electrode GE.

When the overlapping areas between the source extension portions SEC and the gate line GL are controlled to be different from one another according to the red, green and blue pixels R, G and B, the TFTs do not have different properties from one another and the kickback voltages of the red, green and blue pixels R, G and B may be controlled to be substantially the same as one another.

In FIGS. 1, 3 and 4, the kickback voltages Vkb are compensated for by changing the storage capacitors Cst. In FIGS. 5 and 7, the kickback voltages Vkb are compensated for by changing the parasitic capacitors Cgs. Alternatively, the kickback voltages Vkb may be compensated for by changing both the storage capacitors Cst and the parasitic capacitors Cgs.

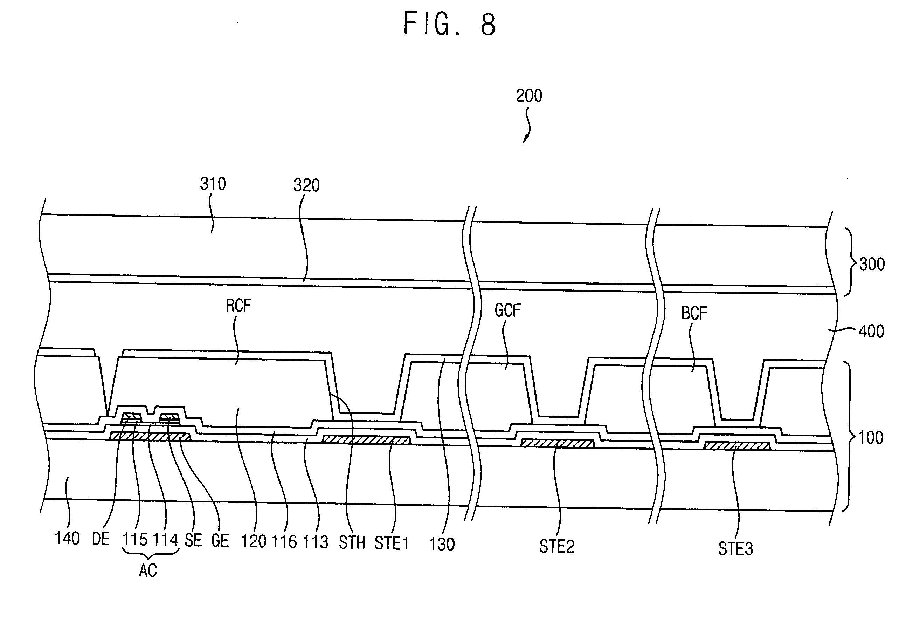

FIG. 8 is a cross-sectional view illustrating a display apparatus according to an example embodiment of the present invention.

Referring to FIG. 8, a display apparatus 200 includes a display substrate 100, an opposing substrate 300 opposite to the display substrate 100 and a liquid crystal layer 400 disposed between the display substrate 100 and the opposing substrate 300.

Examples of the display substrate 100 include the display substrate shown in FIGS. 1 to 7. Thus, any further explanation concerning the display substrate 100 will be omitted.

The opposing substrate 300 is opposite to the display substrate 100 between which the liquid crystal layer 400 is interposed. The opposing substrate 300 includes a common electrode 320 formed on a surface of the opposing substrate 300 opposite to the display substrate 100. The common electrode 320 includes a transparent conductive material to transmit light. For example, the common electrode 320 may include indium zinc oxide (IZO) or indium tin oxide (ITO). The common electrode may include opening patterns in order to improve a viewing angle.

The opposing substrate 300 may further include a black matrix and an organic layer formed thereon. The organic layer flattens a surface of the opposing substrate 300.

The liquid crystal layer 400 includes liquid crystal molecules having optical and electrical properties such as an anisotropic refractive index, an anisotropic dielectric constant, etc. The arrangement of the liquid crystal molecules may be changed according to changes in an electric field between the pixel electrode 130 and the common electrode 320 and an amount of light passing through the liquid crystal layer 400 is controlled by the arrangement of the liquid crystal molecules.

According to the display substrate and the display apparatus having the display substrate of the present invention, areas of storage electrodes and/or opening areas of storage holes are controlled to be different from one another according to red, green and blue pixels so that storage capacitors are controlled to be different from one another according to the red, green and blue pixels. Therefore, kickback voltages of the red, green and blue pixels may be controlled to be substantially the same as one another and a color shift according to changes of color coordinates may not be generated.

In addition, an overlapping area between a source electrode and a gate line is controlled to be different from one another according to the red, green and blue pixels. Therefore, the kickback voltages of the red, green and blue pixels may be controlled to be substantially the same as one another and a color shift according to changes of color coordinates may not be generated.

Having described the example embodiments of the present invention and its advantage, it is noted that various changes, substitutions and alterations can be made herein without departing from the spirit and scope of the invention as defined by appended claims.

**Claims**

1. A display substrate comprising:

   a pixel layer including a first storage electrode, a second storage electrode and a third storage electrode respectively formed in a red pixel region, a green pixel region and a blue pixel region, at least one of the first, second and third storage electrodes having an area different from a remainder of the storage electrodes;
   a color filter layer including a red color filter, a green color filter and a blue color filter formed on the pixel layer, the red, green and blue color filters respectively corresponding to the red pixel, the green pixel and the blue pixel; and
   a pixel electrode formed on the color filter layer, the pixel electrode corresponding to each of the red, green and blue pixels.

2. The display substrate of claim 1, wherein areas of the first, second and third storage electrodes are defined such that kickback voltages of the red, green and blue pixels are substantially identical.

3. The display substrate of claim 1, wherein a first storage hole, a second storage hole and a third storage hole respectively corresponding to the first, second and third storage electrodes respectively are formed through the red, green and blue color filters.

4. The display substrate of claim 3, wherein areas of the first, second and third storage electrodes and opening areas of the first, second and third storage electrodes are controlled so that kickback voltages of the red, green and blue pixels are substantially identical to one another.

5. The display substrate of claim 1, wherein the pixel layer further comprises:

   a gate wire comprising a gate line and a gate electrode connected to the gate line; and
   a data wire insulated from the gate wire by a gate insulation layer, the data wire including a data line crossing the gate line, a drain (source) electrode connected to the data line and a source electrode spaced apart from the drain electrode.

6. The display substrate of claim 5, wherein the storage electrode is formed from a same layer as the gate wire.

7. A display substrate comprising:

   a pixel layer including a first storage electrode, a second storage electrode and a third storage electrode associated with respectively a red pixel, a green pixel and a blue pixel;
   a color filter layer formed on the pixel layer, the color filter layer comprising: a red color filter having a first storage hole formed through the red color filter and associated with the first storage electrode, a green color filter having a second storage hole, formed through the green color filter and associated with the second storage electrode, and a blue color filter having a third storage hole formed through the blue color filter, and associated with the third storage electrode, wherein each of the first, second and third storage holes has an area associated with the respective storage electrodes and further wherein the area of at least one of the first, second and third storage holes is different than an area of remainder of the storage holes; and
   first, second and third pixel electrodes formed on the color filter layer, the first, second and third pixel electrodes being associated with red, green and blue pixels.

8. The display substrate of claim 7, wherein opening areas of the first, second and third storage holes established such that kickback voltages of the red, green and blue pixels are substantially identical to one another.

9. A display substrate comprising:

a pixel layer including a first source electrode, a second source electrode and a third source electrode, which overlap with gate electrodes, respectively formed in a red pixel, a green pixel and a blue pixel, at least one of portions of the first, second and third source electrodes overlapping with the gate electrode having a different area from a remainder of the source electrodes;

a color filter layer including a red color filter, a green color filter and a blue color filter, which respectively correspond to the red, green and blue pixels, formed in the pixel layer; and

first, second and third pixel electrodes formed on the color filter layer, the first, second and third pixel electrodes being associated with red, green and blue pixels.

10. The display substrate of claim 9, wherein areas of the portions of the first, second and third source electrodes overlapping with the gate electrodes are controlled so that kickback voltages of the red, green and blue pixels are substantially identical to one another.

11. The display substrate of claim 10, wherein the pixel layer further comprises a first storage electrode, a second storage electrode and a third storage electrode respectively formed in the red, green and blue pixels, and a first storage hole, a second storage hole and a third storage hole respectively corresponding to the first, second and third storage electrodes are respectively formed through the red, green and blue color filters.

12. A display substrate comprising:

a pixel layer including a first source extension portion, a second source extension portion and a third source extension portion respectively extending from source electrodes respectively formed in a red pixel, a green pixel and a blue pixel, wherein the first, second and third source extension portions overlap a gate line, at least one of the first, second and third source extension portions having an area of a size different from a size of remaining ones of the drain extension portions;

a color filter layer including a red color filter, a green color filter and a blue color filter, which correspond to the red, green and blue pixels, formed on the pixel layer; and

first, second and third pixel electrodes formed on the color filter layer, the first, second and third pixel electrodes being associated with red, green and blue pixels.

13. The display substrate of claim 12, wherein areas of the portions of the first, second and third source extension portions are controlled so that kickback voltages of the red, green and blue pixels are substantially identical to one another.

14. The display substrate of claim 13, wherein the pixel layer further comprises a first storage electrode, a second storage electrode and a third storage electrode respectively formed in the red, green and blue pixels, and a first storage hole, a second storage hole and a third storage hole respectively corresponding to the first, second and third storage electrodes are respectively formed through the red, green and blue color filters.

15. A display apparatus comprising:

a display substrate comprising:
a pixel layer including a first storage electrode, a second storage electrode and a third storage electrode associated with respectively a red pixel, a green pixel and a blue pixel;

a color filter layer including a red color filter having a first storage hole formed therethrough, a green color filter having a second storage hole formed therethrough and a blue color filter having a third storage hole formed therethrough, the first, second and third storage holes respectively corresponding to the first, second and third storage electrodes, at least one of the first, second and third storage electrodes having a different area from a remainder of the storage electrodes or at least one of the first, second and third storage holes having a different area from a remainder of the storage holes; and

a pixel electrode formed on the color filter layer, the pixel electrode corresponding to the red, green and blue pixels;

an opposing substrate opposite to the display substrate, the opposing substrate including a common electrode formed thereon; and

a liquid crystal layer disposed between the display substrate and the opposing substrate.

**16.** The display apparatus of claim 15, wherein areas of the first, second and third storage electrodes and opening areas of the first, second and third storage holes are controlled so that kickback voltages of the red, green and blue pixels are substantially identical to one another.

**17.** A display apparatus comprising:

a display substrate comprising:

a pixel layer including a first source electrode, a second source electrode and a third source electrode, which overlap with gate electrodes, respectively formed in a red pixel, a green pixel and a blue pixel, at least one of portions of the first, second and third source electrodes overlapping with the gate electrode having a different area from a remainder of the source electrodes;
a color filter layer including a red color filter, a green color filter and a blue color filter, which respectively correspond to the red, green and blue pixels, formed in the pixel layer; and
first, second and third pixel electrodes formed on the color filter layer, the first, second and third pixel electrodes being associated with red, green and blue pixels;
an opposing substrate opposite to the display substrate, the opposing substrate including a common electrode formed thereon; and
a liquid crystal layer disposed between the display substrate and the opposing substrate.

**18.** The display apparatus of claim 17, wherein areas of portions of the first, second and third source electrodes overlapping with the gate electrode are controlled so that kickback voltages of the red, green and blue pixels are substantially identical to one another.

**19.** A display apparatus comprising:

a display substrate comprising:

a pixel layer including a first source extension portion, a second source extension portion and a third source extension portion respectively extending from source electrodes respectively formed in a red pixel, a green pixel and a blue pixel, wherein the first, second and third source extension portions overlap a gate line, at least one of the first, second and third source extension portions having an area of a size different from a size of remaining ones of the source extension portions;
a color filter layer including a red color filter, a green color filter and a blue color filter, which correspond to the red, green and blue pixels, formed on the pixel layer; and
first, second and third pixel electrodes formed on the color filter layer, the first, second and third pixel electrodes being associated with red, green and blue pixels;
an opposing substrate opposite to the display substrate, the opposing substrate including a common electrode formed thereon; and
a liquid crystal layer disposed between the display substrate and the opposing substrate.

**20.** The display substrate of claim 19, wherein areas of the portions of the first, second and third source extension portions are controlled so that kickback voltages of the red, green and blue pixels are substantially identical to one another.

# FIG. 1

FIG. 2

100

BCF

GCF

RCF

CD

STE3

STE2

STE1

130

120 116 113 STH

SE GE

115 114

AC

140 DE

110

# FIG. 3

# FIG. 4

# FIG. 5

FIG. 6

# FIG. 7

# FIG. 8

EP 1 972 989 A2